# EUROPEAN PATENT APPLICATION

(11) **EP 4 664 321 A1**
(43) Date of publication of application: **17.12.2025**
(21) Application number: 24315287.3
(22) Date of filing: 13.06.2024
(51) Int. Cl.: G06F 16/84, G06N 3/00

(54) **AUTOMATING DATA STRUCTURE TRANSFORMATION**

(71) Applicant: Amadeus S.A.S., 06410 Biot (FR)
(72) Inventor: Maes, Wim, 06410 Biot (FR); Lopez Ruiz, Eduardo Rafael, 06410 Biot (FR); Goeman, Wim, 06410 Biot (FR); Beckers, Philippe, 06410 Biot (FR); Stockmar, Gero, 06410 Biot (FR)
(74) Representative: Samson & Partner Patentanwälte mbB

(57) **Abstract**

A computerized method, system and computer program for automating data structure transformation from a source data structure to a target data structure are presented. The processes performed comprise providing, to a large language model, LLM, artificial intelligence tool, a transformation model alongside with a request to generate an updated transformation model, receiving, from the LLM artificial intelligence tool, information relating to the updated transformation model, updating the transformation model, applying the transformation model to a source data to obtain a target data item, testing the transformation model and target data item, acquiring transformation feedback information regarding the correctness of the target data item and/or the transformation model, repeating previous features until a stopping condition is reached, and using the transformation model for automatic transformation of data items from the source data structure to the target data structure.

## Description

### FIELD

The present disclosure relates to methods and systems for automating data processing, in particular, for automating data structure transformation from a source data structure to a target data structure.

### BACKGROUND

Many computing domains are not based on standardized data structures, but different companies, research groups, associations, etc. apply different proprietary or standardized but different data structures. In such non-standardized environments, if two computing systems wish to interact, if files shall be shared between two computing environments, if intermediate platforms facilitate communication between different computing systems, or the like, it happens often that a data structure transformation from one data structure to another will be required.

For example, a software developer, who receives a source code in one programming language and wants to provide the same function in another project implemented in a different programming language, needs to transform the source code received into the target programming language. Or a web search platform using an own data structure but having to query multiple databases with multiple different data structures needs to transform the queries from its own data structure to the other data structures of the databases to be queried.

To handle these data item transformations, e.g., transformation of files, codes, queries, or the like, different approaches have been developed in the past that are based on generating transformation models, which transform a data item in a source data structure to a data item in a target data structure. The generation of such models is, however, not completely automated. All processes require frequent and time-consuming exchanges between expert teams of developers that know the source and target data structures to ensure the accuracy and relevancy of the mapping of the elements in the data structures and the resulting transformation model(s), also called transformation code(s).

Hence, there is a need for an improved method and system for automating data structure transformation.

### SUMMARY

In this context, a computerized method for automating data structure transformation from a source data structure to a target data structure is presented. The method comprises providing, from a mapper core module to a large language model, LLM, artificial intelligence tool via a communication interface, a transformation model for transforming data items from the source data structure to the target data structure alongside with a request to generate an updated transformation model, receiving, from the LLM artificial intelligence tool at the mapper core module via the communication interface, information relating to the updated transformation model, updating, at the mapper core module, the transformation model based on the information relating to the updated transformation model, applying, at the mapper core module, the transformation model to a source data item in the source data structure to obtain a target data item in target data structure, evaluating the transformation model and testing the target data item at an executing framework requiring the target data structure, acquiring, at the mapper core module from at least one feedback actor, transformation feedback information regarding the correctness of the target data item and/or the transformation model, repeating previous features until a stopping condition related to the transformation feedback information is reached, and using the transformation model for automatic transformation of data items from the source data structure to the target data structure.

In some embodiments, the at least one feedback actor comprises a code repository inspector, and the method further comprises conducting, by the code repository inspector, an analysis of the source data structure to enrich the transformation model with additional data, wherein the additional data comprises at least one of annotations, existing model documentation, library information, and data structure information. In some further embodiments, the at least one feedback actor comprises a compiler feedback actor, and the method further comprises providing, by the compiler feedback actor to the mapper core module, compilation data, wherein the compilation data comprises at least one of errors, warnings, and review comments. In some further embodiments, the at least one feedback actor comprises a test feedback actor, and the method further comprises providing, by the test feedback actor, execution pipeline insights to the mapper core module, wherein the execution pipeline insights comprise at least one of functional test outcomes and non-functional requirements assessments. In some further embodiments, the at least one feedback actor comprises a monitoring feedback actor, and the method further comprises transmitting, by the monitoring feedback actor to the mapper core module, real-time operational data, wherein the real-time operational data comprises at least one of response times and error codes.

In some embodiments, the communication interface comprises an assistive human communication interface, and the method further comprises facilitating, by the assistive human communication interface, interaction between the LLM artificial intelligence tool and a user by querying the user for challenges identified with testing the target data item and/or assimilating input from the user to resolve mapping complexities. In some further embodiments, the communication interface comprises a conversion filter, and the method further comprises employing, by the conversion filter, heuristic logic and/or analytics to ensure system integrity against security critical informational flow between the LLM artificial intelligence tool and the user and/or misuse of the LLM artificial intelligence tool by the user. In some further embodiments, communication interface comprises an LLM interpreter, and the method further comprises evaluating, by the LLM interpreter, outputs from the LLM artificial intelligence tool before transmitting the information relating to the updated transformation model to the mapper core module.

In some embodiments, the method further comprises obtaining, at the mapper core module, a source data structure model and a target data structure model, wherein obtaining comprises receiving or generating the source data structure model and the target data structure model at the mapper core module, and generating, at the mapper core module, the transformation model based on the source data structure model and the target data structure model. In some further embodiments, the mapper core module comprises a data structure modeler, and the method further comprises aggregating, by the data structure modeler, information relating to the target data structure into the target data structure model and/or information relating to the source data structure into the source data structure model. In some further embodiments, the mapper core module comprises a context mapping engine and an application programming interface, API, mapping engine, and the method further comprises aggregating, by the context mapping engine, coding information of the source data structure model and coding information of the target data structure model, wherein coding information comprises at least one of coding style, used libraries, and framework functions, and combining, by the API mapping engine, the coding information of source data structure model and the target data structure model to generate the transformation model. In some further embodiments, the mapper core module comprises a mapping generator, and the method further comprises interpreting, by the mapping generator, the information relating to the updated transformation model to update the transformation model.

According to another aspect of the disclosure a computing system for automating data structure transformation from a source data structure to a target data structure is presented. The computing system comprises a mapper core module, a communication interface connected to a large language model, LLM, artificial intelligence tool and the mapper core module, and one or more feedback actors connected to the mapper core module and to an executing framework requiring the target data structure. The computing system is configured to provide, from the mapper core module to the LLM artificial intelligence tool via the communication interface, a transformation model for transforming data items from the source data structure to the target data structure alongside with a request to generate an updated transformation model, to receive, from the LLM artificial intelligence tool at the mapper core module via the communication interface, information relating to the updated transformation model, to update, at the mapper core module, the transformation model based on the information relating to the updated transformation model, to apply, at the mapper core module, the transformation model to a source data item in the source data structure to obtain a target data item in target data structure, to test the transformation model and the target data item at the executing framework requiring the target data structure, to acquire, at the mapper core module from at least one feedback actor of the one or more feedback actors, transformation feedback information regarding the correctness of the target data item and/or the transformation model, to repeat the previous features until a stopping condition related to the transformation feedback information is reached, and use the transformation model for automatic transformation of data items from the source data structure to the target data structure.

In embodiments, the computing system is configured to execute further methods as described herein.

According to yet another aspect of the disclosure, a computer program is provided that comprises instructions which, when the program is executed by a computer, cause the computer to carry out the method as described herein.

The foregoing paragraphs have been provided by way of general introduction and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

The foregoing and further objects, features and advantages of the present subject matter will become apparent from the following description of exemplary embodiments with reference to the accompanying drawings, wherein like numerals are used to represent like elements, in which:
Fig. 1 is a flow chart of the method according to the disclosure.
Fig. 2 presents a high-level overview on the solution described herein.
Fig. 3 and Fig. 4 show an example of data structure transformation according to the disclosure.
Fig. 5 is a schematic diagram of main components, such as a mapper core module, a communication interface, and one or more feedback actors, supporting automating data structure transformation.
Fig. 6 shows a detailed embodiment of the communication interface.
Fig. 7A and Fig. 7B show a detailed embodiment of the mapper core module.
Fig. 8 presents a detailed diagram of different components and their interplay according to an embodiment of the disclosure.
Fig. 9 is diagrammatic representation of a computing system, which may implement all or part of the functionalities described herein.

### DETAILED DESCRIPTION

The present disclosure relates to methods and systems for automating data structure transformation of data items from a source data structure to a target data structure. Data items in the following can be data snippets, data files, image files, audio files, source code, and the like, in particular, any data item that may require a translation from a source data structure to a target data structure. Data structures shall also not be understood limiting as a specific structure for storing data but refers to the organisation and structure of a data set, a programming language, a database query, etc., i.e., how to organise a data item that is provided to a processing platform for (internal, i.e., technical) processing of the data item.

Transformation of data items from a source data structure to a target data structure is required in many computing areas. If two computing systems wish to interact, if files shall be shared between two computing environments, if intermediate platforms facilitate communication between different computing systems, or the like, a data structure transformation from one data structure to another will usually be required.

Data item transformations, e.g., transformation of files, codes, queries or the like, often apply transformation models, also called transformation codes, which transform a data item in a source data structure to a data item in a target data structure. The generation of such models is, however, not completely automated. Different known approaches are listed in the following.

The general approach is manual mapping. Companies requiring data structure translation need to have experts that determine an element mapping manually. Element mapping means finding structures that correspond to each other to determine where an element in a source data item should be placed and how the element should be formulated in the target data structure. The experts then create the transformation code that is recurrently used when application programming interfaces (APIs) connecting systems based on different data structures exchange information. All work in this approach is manual.

Graphical data mapping tools have further been developed. These promise that less experienced developers can do the element mapping with the help of software, which generates a skeleton of a transformation code. The mapping is still manual, but the transformation code is generated automatically.

With further effort, tools that partially automate a part of the element mapping and/or transformation code generation have been generated. However, this automation is generally limited to data structures that are similar. These tools usually do not work for a dynamic and changing field of multiple different data structures.

Modern tools also apply generative artificial intelligence (AI) for assisting users. One example is GITHUB^{™} Copilot, which offers generative AI as a service for providing suggestions for whole lines of code. Developers use this assistance to improve their efficiency in coding but these tools are not applicable for automated data structure transformation. Developers can, however, improve their efficiency in combination with the three processes described before.

All processes require frequent and time-consuming exchanges between expert teams of developers that know the source and target data structures to ensure the accuracy and relevancy of the mapping of the elements in the data structures and the resulting transformation model(s).

For illustrating the way of automating data structure transformation, an example of including a content provider's API into a computing ecosystem of a search provider is described in the following. This particular example should not be considered limiting since the described processes can be applied to any data structure and in any computing system, in which data items have to be transformed from one data structure to another.

In the search (e.g., travel search and booking) provider ecosystem considered here, the large number of different content providers to be queried by the search provider (i.e. several different APIs to be integrated and thus several transformation codes required), the unknown volume of queries to these content providers and the limited pool of resources are of particular importance for the automation of the transformation/translation of data elements. Normally, the initial mapping of the individual elements of a source and target data structure is performed by an experienced developer, as described above. For a nominal travel search and booking process, more than 2,000 elements must be assigned. These elements are mapped for each request and also for each response (e.g., the flight results - backward mapping). The work to be done usually involves element mapping as such, but also more advanced logic such as transformations, calculations and injections of elements. From time to time, the element mappings and transformation models used are typically to be updated because content providers change their data structures.

The inventors have experienced that generative AI provides advantages in the field of data structure transformation to at least partially help to automate the work needed to integrate an API. The biggest efficiency gain coming from generative AI lies in using generative AI for supporting the element mapping and the generation and update of transformation code. Generative AI can help to reduce a knowledge barrier and increase the resource-pool able to work on content as well as to reduces time needed to work on boilerplate-codes and increases efficiency and motivation for developers.

Therefore, the herein presented solution for automating data structure transformation of data items from a source data structure to a target data structure uses generative artificial intelligence (AI), in particular, a large language model (LLM) AI tool. This tool can, in some embodiments, support an exchange with the content provider (human developers or the platform as such), collect all the needed information to generate and validate the API's element mapping and suggest (updated) transformation code as is described in the following. Moreover, the solution presented herein overcomes several shortcomings of the generative AI, such as limited context size (tokens), AI overconfidence (always providing an answer even when no sensible solution is possible), hallucinations, usage costs, lack of domain specific knowledge, cross-domain usage, and compatibility with existing data models.

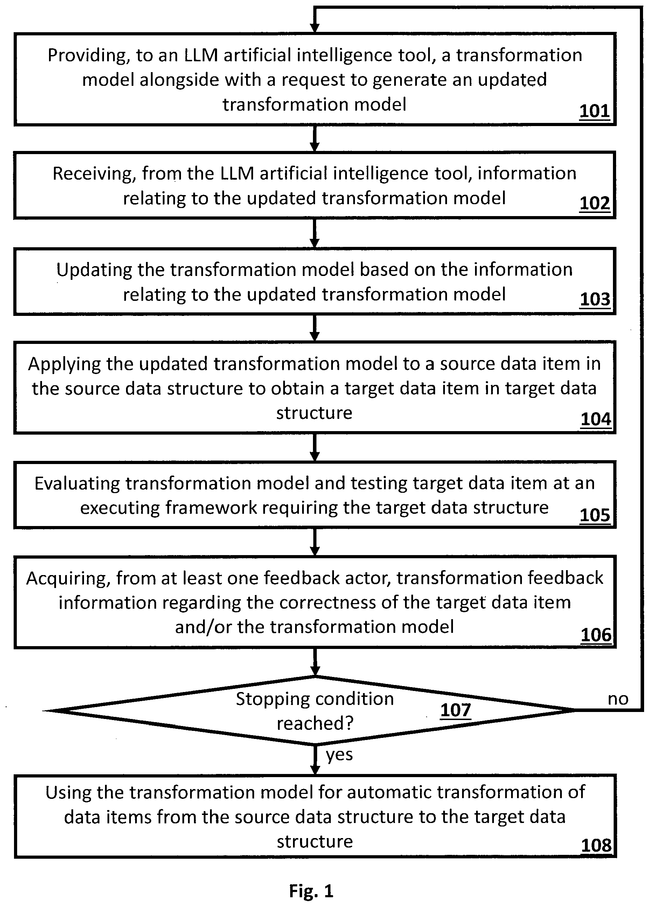

Now turning to Fig. 1, which is a flow chart of the main processes to be performed in a computing system for facilitation of transforming data structures according to the disclosure. The method for automating data structure transformation from a source data structure to a target data structure in this example comprises as a first process 101 providing to a large language model (LLM) artificial intelligence (AI) tool a transformation model for transforming data items from the source data structure to the target data structure alongside with a request to generate an updated transformation model.

The transformation model can be an executable algorithmic code that translates a data item from one data structure into another or can be itself a data structure defining information of the two data structures (source and target) and a mapping of elements within the two data structures and may then be used by another executable program as input to translate the data item. The transformation model as provided to the LLM AI tool may have been received from a database, generated from scratch based on information about the source data structure and the target data structure and the elements required in these data structures by the mapper core module, or updated iteratively as described herein. The transformation model may have also been generated by an expert or expert team but may require update because one or more of the source data structure and the target data structure have changed. In some embodiments, the transformation model may be generated by the LLM AI tool. Therefore, the LLMA AI tool may be provided with one or more data items in the source data structure and one or more data items in the target data structure and may be requested to generate a first transformation model.

The request with the transformation model may be initiated by a mapper core module and may be sent via a communication interface. The mapper core module may be considered to be the heart of the herein presented solution since it comprises the logic to generate and update the transformation model. All components, i.e., modules, interfaces, and the like, described herein may be implemented as software, hardware, or a combination thereof. The functions provided by modules may be implemented in one single computer or in a distributed computing system including multiple different computers, servers, cloud computing services, and similar processing systems capable of performing the functions described herein. Generally, one or more of the components described herein may be implemented by machine learning algorithms that are capable of performing the required tasks.

The request to generate an updated transformation model may be any suitable natural language command to the LLM AI tool. The LLM AI tool is further not restricted to any particular implementation but any suitable generative AI tool, i.e., a third-party off-the shelf tool available at the market, such as ChatGPT from OpenAI^{™}, Copilot from Microsoft ^{™}, Gemini from Google^{™}, and LLaMA from Meta^{™}, can be used. It is noted that, although the efficiency, correctness, and performance of the herein described method may depend on the implementation of the LLM AI tool, the general principles described herein can be used with any generative AI tool. Hence, the focus of this disclosure is not on the implementation of the LLM AI tool but on the components required to interplay with this tool to enable automatic data structure transformation.

The request may in some embodiments also comprise transformation feedback information. The transformation feedback information may be any information about how well the transformation model is capable of transforming a data item, such as a file, data snippet, and the like, of the source data structure to a data item of the target data structure. The transformation model (sometimes also denoted as transformation code) is specific for a transforming data items from the source data structure to the target data structure and comprises mapping information, i.e., which elements of the source data structure relate to which elements of the target data structure. In some examples, the transformation model can directly be applied to data items, i.e., it is executable code that transforms a data item from the source data structure to the target data structure. In some other examples, the transformation model serves as input for another computer program that uses the mapping information of the transformation model as information for transforming a data item from the source data structure to the target data structure.

The method further comprises as a next process 102 receiving from the LLM artificial intelligence tool information relating to the updated transformation model. The information relating to the updated transformation model may again be received at the mapper core module via the communication interface. The mapper core module can be considered to be a main component of the disclosure described herein since almost all processes start and/or end at the mapper core module. The communication interface mainly facilitates communication with the LLM AI tool and, in some embodiments, also users.

The information relating to the updated transformation model may be a suggestion of some updates in the transformation model given in natural language or may be a completely drafted updated transformation model. It may also comprise further information, the LLM AI tool assesses to be relevant.

The method then comprises process 103 concerning an update of the transformation model based on the information relating to the updated transformation model, which may be again performed at the mapper core module. This process may comprise analysing, e.g., by a specific software module of the mapper core module, the information relating to the updated transformation model and only include those aspects, modifications, suggestions, and the like, that are relevant for updating the transformation model. Deciding which information is relevant to be included may be based on additional information present at the mapper core module about the source data structure, the target data structure, and/or the transformation model. For example, the mapper core module may keep parts of the transformation model the same even if the LLM AI tool suggests amendments in these parts of these parts relate to elements that have not changed according to the additional information.

Process 104 then relates to applying, e.g., at the mapper core module, the transformation model to a source data item in the source data structure to obtain a target data item in target data structure. This means, the transformation model (on its own or in combination with other executing codes) is used to transform the source data item, e.g., a travel query, a source code etc., which has the source data structure, to a target data item, which has the target data structure and comprises the same elements/information as the source data structure.

The transformation model is evaluated and the target data item is tested in process 105 at an executing framework requiring the target data structure. Evaluation of the transformation model may correspond to analysing a coding structure, presence of all required element mappings, and the like. The executing framework may be an emulator or another processing environment included or connected to the mapper core module or can be completely independent, such as the platform of the content provider to which the travel query shall be sent. The executing framework may also be distributed. Testing the transformation model and the target data item may comprise searching for errors when applying the transformation model and/or when using the target data item at the executing framework.

The method with process 106 further comprises acquiring from at least one feedback actor transformation feedback information regarding the correctness of the target data item and/or the transformation model. Additionally, feedback information may also relate to specific other information of the transformation model, such as, efficiency, coding style, storage capacity, and the like. The mapper core module may acquire the transformation feedback information, e.g., from multiple different feedback actors in one feedback message (information may be aggregated in some embodiments) or from each present feedback actor in different feedback messages.

In some embodiments, the at least one feedback actor comprises a code repository inspector. In these examples, the code repository inspector may conduct an analysis of the source data structure to enrich the transformation model with additional data, wherein the additional data comprises at least one of annotations, existing model documentation, library information, and data structure information. Hence, the code repository inspector may not evaluate the target data item but the transformation model. The code repository inspector may also already evaluate the transformation model when it is updated in process 103.

In some further embodiments, the at least one feedback actor comprises a compiler feedback actor. In these examples, the compiler feedback actor may provide to the mapper core module compilation data, i.e., data relating to compilation of the transformation model to transform the source data item and/or data relating to compilation of the target data item at the executing framework. The compilation data may comprise at least one of errors, warnings, and review comments.

In some further embodiments, the at least one feedback actor comprises a test feedback actor. The test feedback actor may provide execution pipeline insights to the mapper core module, wherein the execution pipeline insights comprise at least one of functional test outcomes and non-functional requirements assessments, e.g., relating to the application of the target data item. In other works, the test feedback actor may indicate whether the target data item is - from a functional point of view - identical to the source data item.

In some further embodiments, the at least one feedback actor comprises a monitoring feedback actor, which may transmit to the mapper core module real-time operational data. The real-time operational data may comprise at least one of response times and error codes. The monitoring feedback actor may, thus, monitor application of the target data item in a live environment.

Until a stopping condition is reached, the processes 101 to 106 are repeated (shown in decision 107) - preferably by using different source data items for testing. The stopping condition may relate to the transformation feedback information, e.g., that the feedback actors have not identified any new errors, that the feedback actors have determined that the performance of the transformation model is above a threshold and/or that for a specified number of time/number of repetitions no improvement of the transformation feedback information (e.g., not less errors, not improved performance etc.) has occurred. In some embodiments, a minimum number of repetitions is predefined, e.g., because feedback information from a first number of repetitions may not be suitable to analyse the correctness sufficiently.

When the stopping condition is reached, the method ends with process 108 and uses the transformation model for automatic transformation of data items from the source data structure to the target data structure. Process 108 may comprise, e.g., storing the transformation model in a database or repository, from where it can be loaded when transformation from the source data structure to the target data structure is needed.

In some embodiments, the communication interface comprises sub-components such as an assistive human communication interface. The assistive human communication interface facilitates interaction between the LLM artificial intelligence tool and, e.g., a user (or another computing system, interacting bot, etc.) by querying the user for challenges identified with testing the target data item and/or assimilating input from the user to resolve mapping complexities. Therefore, by using the assistive human communication interface, further input can be gathered, which may be provided to the LLM AI tool and/or may be included in the update process performed by the mapper core module.

In some further embodiments, the communication interface comprises a conversion filter. In these examples, the conversion filter may employ heuristic logic and/or analytics to ensure system integrity against security critical informational flow between the LLM artificial intelligence tool and the user and/or misuse of the LLM artificial intelligence tool by the user. This means, the conversion filter may identify terms that indicate security critical informational flow or misuse. For example, if the LLM AI tool includes internal secrets provided by the mapper core module in its answers to the users, the conversion filter may delete these parts. Or if the user asks the LLM AI tool to tell a joke, the conversion filter may not transmit the request to the LLM AI tool but prompt the user with a notice to not misuse the LLM AI tool.

In some further embodiments, the communication interface comprises an LLM interpreter, which may evaluate outputs from the LLM artificial intelligence tool before transmitting the information relating to the updated transformation model to the mapper core module. Such an evaluation helps to ensure that irrelevant information provided by the LLM AI tool, e.g., lengthy texts about well-known background information, greeting and farewell phrases, and the like, is not transmitted to the mapper core module such that the mapper core module can update the transformation model more efficiently.

The mapper core module may also obtain a source data structure model and a target data structure model. Obtaining refers to receiving or generating the source data structure model and the target data structure model at the mapper core module. The source data structure model and the target data structure model describe how the source data structure and the target data structure are structured, e.g., which elements are present and which information is contained in the elements. A possible precise implementation of these models may rely on a tree-structure represented by a set of object-oriented classes (code), which link to each other through aggregation (in object-oriented programming terminology) to form the tree. There is one tree for the source data structure (forming the source data structure model) and one tree for the target data structure (forming the target data structure model). All provided information is encapsulated in these models through coding practices such as code comments, code annotations, code types, and the like.

In some examples, the mapper core module may receive the source data structure model and the target data structure model from a database or repository. The source data structure model and the target data structure model may have been created by administrators or by the mapper core module in a previous execution. Hence, the mapper core module may also obtain the models by creating them. In these examples, the mapper core module may then also generate the transformation model, e.g., a first version of the transformation model, based on the source data structure model and the target data structure model. It is apparent that this first version of the transformation model is then refined, i.e., updated as shown with the main processes of Fig. 1.

In some embodiments, the mapper core module comprises a data structure modeler. This data structure modeler aggregates information relating to the target data structure into the target data structure model and/or information relating to the source data structure into the source data structure model. Hence, when the mapper core module creates the source data structure model and the target data structure model, the data structure modeler extracts information from, e.g., data items, documentation, etc., relating to the source data structure and the target data structure to generate the source data structure model and the target data structure model.

In some further embodiments, the mapper core module comprises a context mapping engine and an API mapping engine. In these examples, the context mapping engine may aggregate code information of the source data structure model and coding information of the target data structure model, wherein coding information comprises at least one of coding style, used libraries, and framework functions. The API mapping engine may then combine the coding information of source data structure model and the target data structure model to generate the transformation model.

In some further embodiments, the mapper core module comprises a mapping generator, which may interpret the information relating to the updated transformation model to update the transformation model. Hence, the mapping generator is dedicated to updating the transformation model.

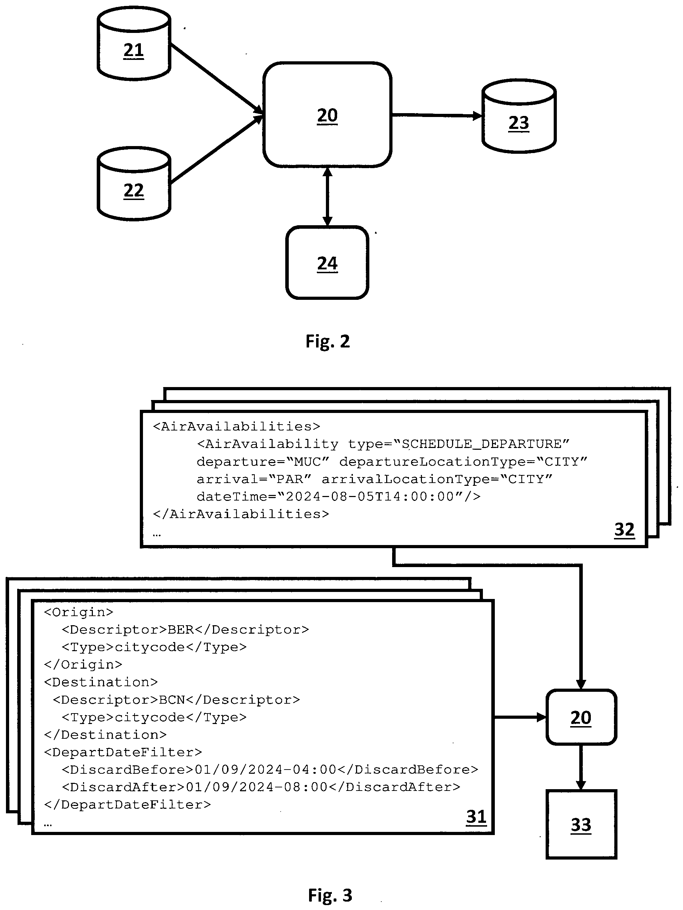

Fig. 2 now presents a high-level overview of facilitating the data structure transformation as described herein. The transformation tool 20 is implemented in a computing system, which may e.g., comprise the mapper core module, the communication interface connected to the large language model, LLM, artificial intelligence tool and the mapper core module, and the one or more feedback actors connected to the mapper core module and to an executing framework requiring the target data structure as described before.

The transformation tool 20 may obtain information from a source data structure repository 21 and from a target data structure repository 22. Such information may comprise, e.g., data items in the respective data structure, documentation, code information, data structure models, and the like. The transformation tool 20 may also store the transformation model as described before in a transformation model repository 23 so that the transformation model as generated/updated/improved can also be used by other applications, users, companies etc. to transform data items from the source data structure to the target data structure. Moreover, the computing system is also connected to a generative AI tool 24, i.e., the LLM AI tool as described before.

The transformation tool 20 for transforming the data items may be used by an expert team. The tool may be made available internally within a company so that non-expert users can use the tool as self-service. In the example of a search platform, the tool may also be provided to the content providers so that these can automatically create transformation models to be applied at the search platform.

The transformation tool 20 ensures highly automated, qualitative content mapping powered by LLM generative AI. Different elements are put in place to increase quality and automation. These elements include prompt tuning, additional input data, other AI models, iterative flow with feeding back output as input, AI powered conversational flow with provider, and the like. To achieve this, an advanced model of a mapper core module in connection with further components is implemented that deals with common LLM limitations such as limited context size (tokens), AI overconfidence (always providing an answer even when no sensible solution is possible), hallucinations, and the like, which allows to keep AI costs negligible.

The herein presented solution allows to regularly adopt to new versions of LLM AI tools 24 to benefit from evolutions in this rapid evolving environment. To achieve full potential, minor retuning only of a prompt generator might be required. The solution also provides full flexibility in that transformation models can be created automatically and updated if needed by using the same processes as described herein.

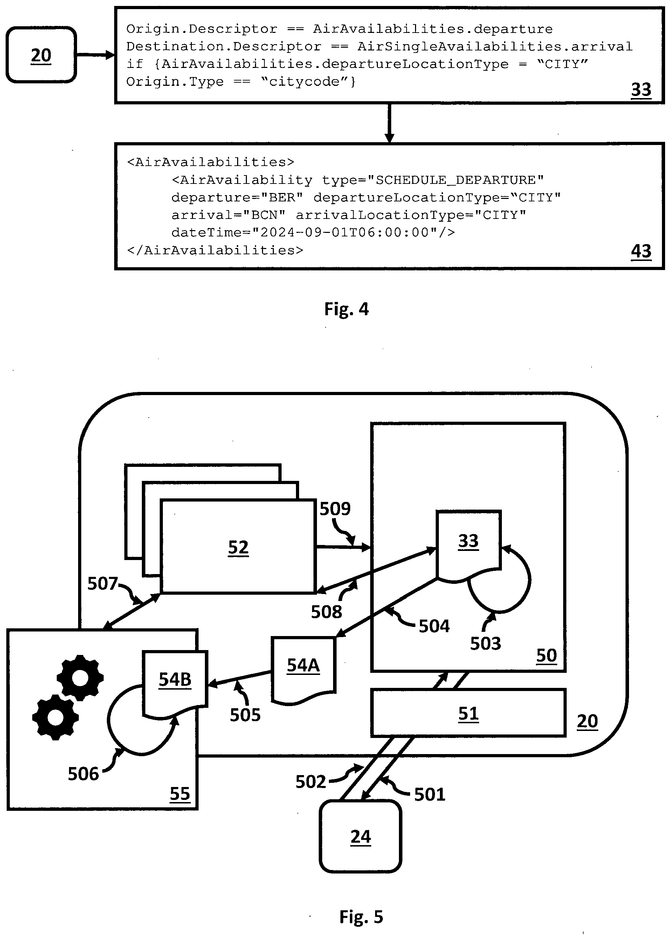

Fig. 3 and Fig. 4 show an example of data structure transformation according to the disclosure. In Fig. 3, the transformation tool 20 receives information about the source data structure, which may be examples of data items 31 in the source data structure. The transformation tool 20 also receives information about the target data structure, which may be examples of data items 32 in the target data structure. In the example of Fig. 3, the data items are travel related queries, e.g., in html or html-like structure.

The data item 31 in the source data structure is structured such that in the "Origin" and "Destination" elements two further elements, namely, a "Descriptor" element and a "Type" element are present. The Type defines the type of the Descriptor content. In this example, the Descriptor relates to the city code of the airport of Berlin as origin and the airport of Barcelona as destination. The "DepartDateFilter" element then defines a slot of departure date and time for the search.

The data item 32 in the target data structure is structured differently. It comprises one "AirAvailabilities" element, which includes different parameters, which define (from top to bottom) that the search is related to a departure schedule of a flight from Munich (departure) to Paris (arrival) around 2 p.m. on 05 August 2024. Hence, most elements are present in both data structures but have different element names or identifiers.

The transformation tool 20 takes this input and generates a transformation model 33, which is further shown in Fig. 4. The resulting transformation model 33 comprises element mappings. For example, the Origin.Descriptor element is mapped to the AirAvailabilities.departure element, the Destination.Descriptor element == AirSingleAvailabilities.arrival element, and if the AirAvailabilities.departureLocationType is "CITY", the Origin.Type element is "citycode". With such a transformation model 33, the source data item 31 (as shown in Fig. 3) could, e.g., be transformed into the target data item 43.

Fig. 5 now is a schematic diagram of the main components of the transformation tool 20, such as the mapper core module 50, the communication interface 51, and the one or more feedback actors 52 supporting automating data structure transformation. With arrow 501, a transformation model 33 for transforming data items from the source data structure to the target data structure is provided from the mapper core module 50 via the communication interface 51 to the LLM AI tool 24 alongside with a request to generate an updated transformation model. In some embodiments, the transformation model may have been previously generated by the LLM AI tool 24. Therefore, the LLM AI tool 24 may have been provided with one or more data items in the source data structure and one or more data items in the target data structure and may have been requested to generate a transformation model.

As indicated above, the request may also comprise transformation feedback information received in a previous iteration, a previous evaluation of the transformation model, and/or a previous testing of a target data item. The transformation feedback information may be any information about how well the transformation model 33 is capable of transforming a data item, such as a file, data snippet, and the like, of the source data structure to a data item of the target data structure. The transformation model 33 is specific for a transforming data items from the source data structure to the target data structure and comprises mapping information, i.e., which elements of the source data structure relate to which elements of the target data structure. In some examples, the transformation model 33 can directly be applied to data items, i.e., it is executable code that transforms a data item from the source data structure to the target data structure. In some other examples, the transformation model 33 serves as input for another computer program that uses the mapping information of the transformation model 33 as information for transforming a data item from the source data structure to the target data structure.

The request to generate an updated transformation model may be any suitable natural language command to the LLM AI tool 24. The LLM AI tool 24 is further not restricted to any particular implementation but any suitable generative AI tool can be used. It is noted that, although the efficiency, correctness, and performance of the herein described method may depend on the implementation of the LLM AI tool 24, the general principles described herein can be used with almost any generative AI tool.

In embodiments, in which the LLM AI tool 24 also sets up the first version of the transformation model 33, the first request to the LLM AI tool 24 may not be to update the transformation model but may comprise "*From source data structure to target data structure, generate an initial mapping*" and/or "*For each data field, write a textual description of how you interpret the data from the source data structure and the target data structure, highlight data fields for which extra information is needed*", accompanied with data items in both data structures.

Requests to update the transformation model may take different forms, such as *"Given response X from the provider*/*execution environment to our inquiry, improve the existing mapping code", "The mapping code*/*transformation model does not compile with error X, correct the transformation model", "The automated functional test expected value X but got value Y, correct the transformation model", "In production, we received error X when inquiring data from the provider. Please correct the transformation model", "Write communication to the provider inquiring about a possible fix for the problem*", and the like.

In arrow 502, the mapper core module 50 receives from the LLM AI tool 24 information relating to the updated transformation model. The information relating to the updated transformation model may be a suggestion of some updates in the transformation model 33 given in natural language or may be a completely drafted updated transformation model 33. It may also comprise further information, the LLM AI tool 24 assesses to be relevant.

The mapper core module 50 that updates the transformation model 33 (arrow 503) based on the information relating to the updated transformation model, which may be performed at the mapper core module 50. For example, if the information relating to the updated transformation model is an updated transformation model (i.e., a full updated version of the transformation model), the mapper core module 50 may compare the previous transformation model 33 and the updated transformation model and include differences in the transformation model. Alternatively, the mapper core module 50 may also replace the previous transformation model with the updated transformation model. If the information relating to the updated *transformation* model only comprises suggestions, e.g., "*Change the element mapping of "XYZ" in line 23 to "ABC""* or the like, the mapper core module 50 may follow these suggestions. Irrelevant suggestions, which may be identified with a detection algorithm, which has been trained on irrelevant amendments, may further be ignored.

The (now updated) transformation model 33 is then applied - as shown with arrow 504 - at the mapper core module 50 to a source data item 54A, which is in the source data structure. Thereby, a target data item 54B in the target data structure is obtained (arrow 505). This means, the transformation model 33 (on its own or in combination with other executing codes) is used to transform the source data item 54A, e.g., a travel query, a source code etc., which has the source data structure, to the target data item 54B, which has the target data structure and comprises the same elements/information as the source data structure.

The transformation model 33 is evaluated and the target data item 54B is tested as shown with arrows 506, 507 and 508. The target data item 54B may be tested in an executing framework 55 requiring the target data structure. Such an executing framework 550 can be an emulator or another processing environment included or connected to the mapper core module 50 and/or included or connected to the transformation tool 20 or can be completely independent, such as the platform of the content provider to which the travel query shall be sent. The executing framework 55 may also be distributed. Testing the target data item 54B may comprise searching for errors when using the target data item 54B at the executing framework 55, e.g., if the executing framework 55 can handle the target data item 54B correctly. The transformation model 33 may be evaluated whether it transforms the target data item 54B without errors when being applied to the source data item 54A. The coding style, storage requirements, documentations, and the like, of the transformation model 33 may also be evaluated.

The arrows 507 and 508 indicate here that one or more of the feedback actors 52 analyse the testing of the target data item 54B at the executing framework 55 and one or more of the feedback actors also analyse the (updated) transformation model 33. Finally, as shown with arrow 509, the mapper core module 50 acquires from at least one of the (one or more) feedback actors transformation feedback information regarding the correctness of the target data item 54B and/or the transformation model 33.

The feedback actors 52 may comprise one or more of the feedback actors described above. The processes of Fig. 5 are repeated until a stopping condition is reached so that the transformation model 33 is sufficiently suitable to transform data items from the source data structure to the target data structure as explained above. The transformation model 33 may then be stored in a database or repository (e.g., such as the repository 23 of Fig. 2), from where it can be loaded when transformation from the source data structure to the target data structure is needed.

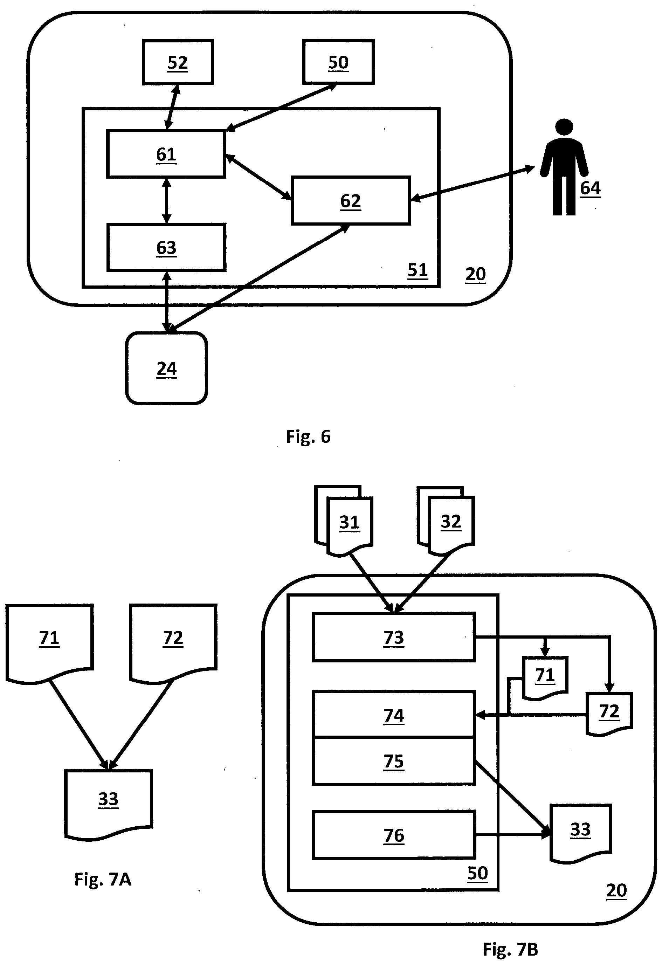

Fig. 6 shows a detailed embodiment of the communication interface 51 of the transformation tool 20 with sub-components such as the assistive human communication interface 61, the conversion filter 62, and the LLM interpreter 63.

The assistive human communication interface 61 facilitates interaction between the LLM AI tool 24 and, e.g., a user 64 (or another computing system, interacting bot, etc.) by querying the user 64 for challenges identified with testing the target data item 54B and/or assimilating input from the user 64 to resolve mapping complexities. Therefore, by using the assistive human communication interface 61, further input can be gathered, which may be provided to the LLM AI tool 24 and/or may be included in the update process performed by the mapper core module 50. The assistive human communication interface 61 may also interact and gather information from the feedback actors 52 such that errors and other detected feedback can automatically be included in communication with the user 64 and/or the LLM AI tool 24.

In Fig. 6, the assistive human communication interface 61 does not interact with the LLM AI tool 24 directly but via the LLM interpreter 63, which may evaluate outputs from the LLM AI tool 24 before transmitting the information relating to the updated transformation model to the mapper core module 50 (via the assistive human communication interface 61). Such an evaluation helps to ensure that irrelevant information provided by the LLM AI tool 24, e.g., lengthy texts about well-known background information, greeting and farewell phrases, and the like, is not transmitted to the mapper core module 50 such that the mapper core module 50 can update the transformation model 33 more efficiently.

The communication interface 51 also comprises the conversion filter 62, which may employ heuristic logic and/or analytics to ensure system integrity against security critical informational flow between the LLM AI tool 24 and the user 64 and/or misuse of the LLM AI tool 24 by the user 64. This means, the conversion filter 62 may identify terms that indicate security critical informational flow or misuse. As can be seen in Fig. 6, when a conversion filter 61 is provided, the communication of the assistive human communication interface 61 with the user 64 is via the conversion filter 62.

Fig. 7A and Fig. 7B show a detailed embodiment of the mapper core module 55. In Fig. 7A, the source data structure model 71 and the target data structure model 72 are shown, which may form the basis for generating the transformation model 33. How this may be done is depicted with processes performed within the transformation tool 20 in Fig. 7B. In this example, the mapper core module 50 comprises the data structure modeler 73, the context mapping engine 74, the API mapping engine 75, and the mapping generator 76.

The data structure modeler may aggregate information relating to the target data structure, which may be received as information and/or data items 31, into the target data structure model 71 and/or information relating to the source data structure, which may be received as information and/or data items 32, into the source data structure model 72. Hence, when the mapper core module 50 creates the source data structure model 71 and the target data structure model 72, the data structure modeler 73 extracts information from, e.g., data items 31, 32, documentation, etc., relating to the source data structure and the target data structure to generate the source data structure model 71 and the target data structure model 72.

The data structure model 73 hence allows the herein described solution to not only work based on predefined source/target data structure specifications but also to generate such specifications, i.e., the source data structure model 71 and the target data structure model 72 itself by analysing one or more data items in the source and target data structures.

The context mapping engine 74 and an API mapping engine 75 interplay to generate the transformation model 33. The context mapping engine 74 may aggregate code information of the source data structure model 71 and coding information of the target data structure model 72, wherein coding information comprises at least one of coding style, used libraries, and framework functions. The API mapping engine 75 may then combine the coding information of source data structure model 71 and the target data structure model 72 to generate the transformation model 33. The mapping generator 76 may further interpret the information relating to the updated transformation model (as described before) to update the transformation model 33.

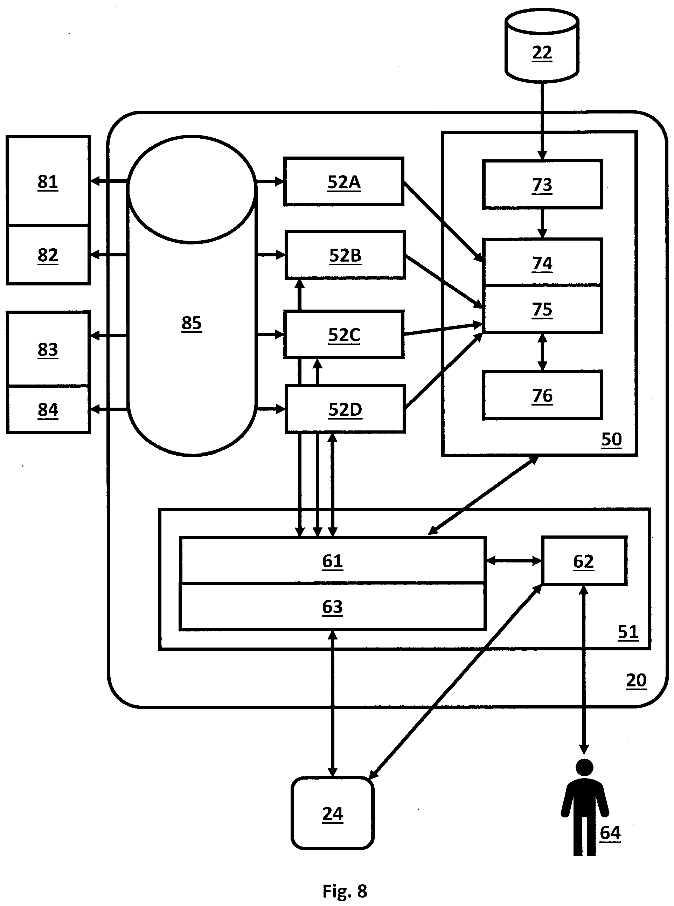

Fig. 8 presents a detailed diagram of different components and their interplay according to an embodiment of the disclosure. In this example, further to the components as described before with respect to Figs. 1 to 7, the transformation tool 20 is connected to an application repository 81, to build tools 82, to a continuous integration (CI) and continuous delivery (CD) pipeline 83, and to product requirements document (PRD) instances 84 of, e.g., a real-time, runtime environment, in which the application for which the mapping is generated runs. Moreover, the repositories 21 and 23 of Fig. 1 are combined in a context repository 85 relating to the source data structure.

The context repository 85 is a sophisticated repository housing a diverse range of source data structure content definitions, each accompanied by a unique set of configuration values, which together form a source data structure model. The context repository 85 also facilitates seamless interaction between the transformation tool 20 and the modules 81 to 84 by encompassing detailed information on source data structure, programming language, build tooling configurations, automated test results publication and triggering mechanisms, PRD instances' operational data, log accessibility, and much more. The context repository 85 provides efficient toggling between different source data structure content definitions and aids experts in describing content in a transformation tool-compatible way. It ensures that the transformation tool 20 is able to interact and iterate within the full software development lifecycle, from the moment the content is integrated, during its lifetime in PRD and until eventually the content mapping is decommissioned.

The feedback actors 52A to 52D interact with the modules 81 to 84 for testing the transformation model and the target data item. The code repository inspector 52A conducts an exhaustive analysis of source data structure to enrich the transformation model with essential annotations such as (but not limited to) existing code documentation, library information, code structure, and the like. The code repository inspector 52A engages interactively with the application repository 81 during mapping generation to incorporate new functionalities seamlessly.

The compiler feedback actor 52B channels compilation data such as (but not limited to) errors, warnings, and review comments back to the transformation tool 20 model for informed decision-making in subsequent mapping generations. The test feedback actor 52C integrates CI/CD pipeline insights such as (but not limited to) functional test outcomes and non-functional requirements (e.g., performance, security) assessments into the transformation tool 20 model for enhanced mapping accuracy. The monitoring feedback actor 52D transmits real-time operational data like response times and error codes to the transformation tool 20 model to refine the mapping process dynamically.

The assistive human communication interface 61 in the communication interface 51 presents queries, challenges and other information to an external user 64 and assimilates their responses to resolve mapping complexities identified by other modules, assistive human communication interface 61 supports multiple channels including email and interactive chats (for example) for diversified user engagement.

The LLM interpreter 63 implements rigorous sanitization protocols on prompts prior to LLM dispatch; ensures LLM output cleanliness, adopts at handling multiple prompts/responses, and ensures optimal response selection from varied prompts. The conversation filter 62employs heuristic logic alongside AI-powered analytics to ensure system integrity against unwanted informational influx or disclosure. Additionally, the conversation filter 62 sanitizes and improves responses (corrects typos for example) from external users 64 to ensure optimal parsing later in the chain.

The mapper core module 50 is the main module responsible for the actual mapping of the two data structure models as described above. All other modules either supply information on the internal (source) data structure context or the external (target) data structure context. The mapper core module 50 maps the two models, is the epicenter of model mapping operations, is fed with insights from ancillary modules in the source data structure model and/or the target data structure model, focusing on generating precise mappings.

The mapper core module 50 comprises the data structure modeler 73, which aggregates information about the target data structure content into a single model, supports multiple sources and formats such as schema's, specifications, diagrams, public internet documentation, and the like. The context mapping engine 74 aggregates coding information from the two data structure models such as coding style, used libraries, custom framework functions, and the like, to be applied in the generated transformation model and element mapping. The API mapping engine 75 fuses both models into an annotated, code-based transformation model for LLM consumption. The mapping generator 76 interprets LLM output and modifies the transformation model and/or data structure models accordingly to implement the new mappings.

The transformation tool 20 has access to the source data structure model, which defines the content that the user wants to map to the target data structure of a content provider. The source data structure model is stored in the context repository 85, which contains all the necessary information for transformation tool 20 to interact with applications that manage the source data structure content.

The transformation tool 20 also has access to the target data structure model. The target data structure model can come from various sources (e.g., from target data structure repository 22) and formats, such as schema's, specifications, diagrams, or public internet documentation. The transformation tool 20 aggregates this information into the target data structure model. This is done every time new target data structure content needs to be mapped against the source data structure and may also be provided by a relevant external party.

It is noted that the roles of the source data structure and the target data structure can be changed and the source data structure becomes the target data structure and vice-versa if transformation in the other direction is required. Hence, in these cases the target data structure model (being an, e.g., internal data structure to an environment of the transformation tool 20) is stored in the context repository 85 and the source data structure model may come from various sources.

The transformation tool 20 creates a mapping between the source data structure and target data structure models. This is done by the mapper core module 50. The context mapping engine 73 extracts the coding information from the two models, such as coding style, used libraries, custom framework functions, etc. The API mapping engine 75 combines the two models into an annotated, code-based transformation model that can be supplied to the LLM AI tool 24. The assistive human communication interface 61 queries the external party, e.g., the user 64 for any challenges identified during the mapping process or LLM application. The communication interface 51 can interact with external users through various channels, such as email or interactive chat. The communication interface 51 also uses the conversation filter 62 to ensure that no unwanted information is disclosed or entered into the system. The LLM interpreter 63 sanitizes the prompts and outputs, handles multiple prompts and responses, and selects the best response from the LLM AI tool 24. The mapping generator 76 parses the response from the LLM AI tool 24 and applies the necessary changes in the code to reflect the new mappings.

The transformation tool 20 validates and improves the mappings that it generates. This is done by using various feedback actors 52A to 52D, such as the code repository inspector 52A, the compiler feedback actor 52B, the test feedback actor 52C, and the monitoring feedback actor 52D. These actors provide the transformation tool 20 with information on the quality and performance of the mappings, such as compilation errors, warnings, code review comments, functional test results, non-functional requirements, response times, error codes, etc. The transformation tool 20 can use this information to generate new or better mappings, again interfacing with the assistive human communication interface 61 to obtain more information from the external provider, e.g., the user 64.

Fig. 8 provides only one example of how the transformation tool 20 works in practice. The transformation tool 20 is a powerful and flexible system that can adapt to different scenarios and requirements.

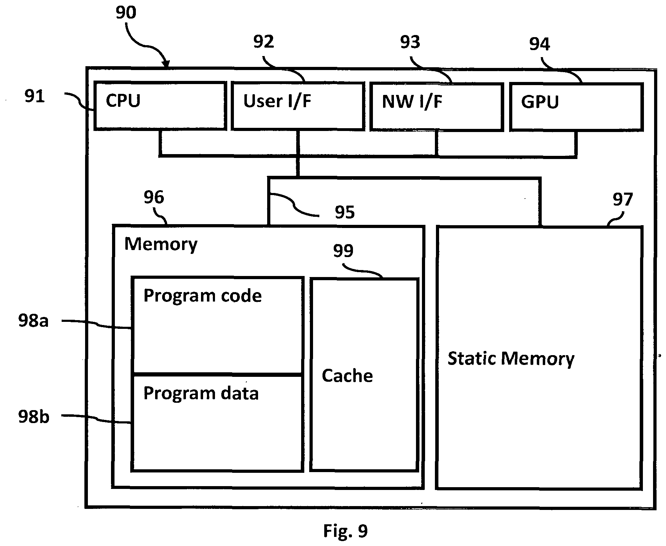

Fig. 9 is a diagrammatic representation of internal components of a computing system 90 implementing the functionality of one or more of the components as described herein. The computing system 90 includes at least one processor 91, a user interface 92, a network interface 93 and a main memory 96, that communicate with each other via a bus 95. Optionally, the computing system 90 may further include a static memory 97 and a disk-drive unit (not shown) that also communicate with each via the bus 95. A video display, an alpha-numeric input device and a cursor control device may be provided as examples of user interface 92. Furthermore, the computing system 90 may also comprise one or more graphics processing units (GPU) 94.

The GPUs 94 may also comprise a plurality of GPU cores or streaming multiprocessors, which comprise many different components, such as at least one register, at least one cache and/or shared memory, and a plurality of ALUs, FPUs, tensor processing unit (TPU) or tensor cores, and/or other optional processing units. GPUs can perform multiple simultaneous computations, thereby enabling the distributing of training processes and speeding up machine learning operations.

The main memory 96 may be a random-access memory (RAM) and/or any further volatile memory. The main memory 96 may store program code 98a and may also store additional program data 98b required for providing the functionalities described herein. Moreover, the main memory 96 may also include a cache 99.

According to an aspect, a computer program comprising instructions is provided. These instructions, when the program is executed by a computer, cause the computer to carry out the methods described herein. The program code embodied in any of the systems described herein is capable of being individually or collectively distributed as a program product in a variety of different forms. In particular, the program code may be distributed using a computer readable storage medium having computer readable program instructions thereon for causing a processor to carry out aspects of the embodiments described herein.

Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer.

A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

It should be appreciated that while particular embodiments and variations have been described herein, further modifications and alternatives will be apparent to persons skilled in the relevant arts. In particular, the examples are offered by way of illustrating the principles, and to provide a number of specific methods and arrangements for putting those principles into effect.

In certain embodiments, the functions and/or acts specified in the flowcharts, sequence diagrams, and/or block diagrams may be re-ordered, processed serially, and/or processed concurrently without departing from the scope of the disclosure. Moreover, any of the flowcharts, sequence diagrams, and/or block diagrams may include more or fewer blocks than those illustrated consistent with embodiments of the disclosure.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, processes, operations, elements, and/or components, but do not preclude the presence or addition of one or more other features, integers, processes, operations, elements, components, and/or groups thereof. Furthermore, to the extent that the terms "include", "having", "has", "with", "comprised of", or variants thereof are used in either the detailed description or the claims, such terms are intended to be inclusive in a manner similar to the term "comprising".

While a description of various embodiments has illustrated the method and while these embodiments have been described in considerable detail, it is not the intention of the applicants to restrict or in any way limit the scope of the appended claims to such detail. Additional advantages and modifications will readily appear to those skilled in the art. The disclosure in its broader aspects is therefore not limited to the specific details, representative apparatus and method, and illustrative examples shown and described. Accordingly, the described embodiments should be understood as being provided by way of example, for the purpose of teaching the general features and principles, but should not be understood as limiting the scope, which is as defined in the appended claims.

## Claims

1. Computerized method for automating data structure transformation from a source data structure to a target data structure comprising:
i) providing, from a mapper core module to a large language model, LLM, artificial intelligence tool via a communication interface, a transformation model for transforming data items from the source data structure to the target data structure alongside with a request to generate an updated transformation model;
ii) receiving, from the LLM artificial intelligence tool at the mapper core module via the communication interface, information relating to the updated transformation model;
iii) updating, at the mapper core module, the transformation model based on the information relating to the updated transformation model;
iv) applying, at the mapper core module, the transformation model to a source data item in the source data structure to obtain a target data item in target data structure;
v) evaluating the transformation model and testing the target data item at an executing framework requiring the target data structure;
vi) acquiring, at the mapper core module from at least one feedback actor, transformation feedback information regarding the correctness of the target data item and/or the transformation model;
vii) repeating features i) to vi) until a stopping condition related to the transformation feedback information is reached; and
viii) using the transformation model for automatic transformation of data items from the source data structure to the target data structure.

2. The method of claim 1, wherein the at least one feedback actor comprises a code repository inspector, the method further comprising:
- conducting, by the code repository inspector, an analysis of the source data structure to enrich the transformation model with additional data, wherein the additional data comprises at least one of annotations, existing model documentation, library information, and data structure information.

3. The method of claim 1 or claim 2, wherein the at least one feedback actor comprises a compiler feedback actor, the method further comprising:
- providing, by the compiler feedback actor to the mapper core module, compilation data, wherein the compilation data comprises at least one of errors, warnings, and review comments.

4. The method of any one of claims 1 to 3, wherein the at least one feedback actor comprises a test feedback actor, the method further comprising:
- providing, by the test feedback actor, execution pipeline insights to the mapper core module, wherein the execution pipeline insights comprise at least one of functional test outcomes and non-functional requirements assessments.

5. The method of any one of claims 1 to 4, wherein the at least one feedback actor comprises a monitoring feedback actor, the method further comprising:
- transmitting, by the monitoring feedback actor to the mapper core module, real-time operational data, wherein the real-time operational data comprises at least one of response times and error codes.

6. The method of any one of claims 1 to 5, wherein the communication interface comprises an assistive human communication interface, the method further comprising:
- facilitating, by the assistive human communication interface, interaction between the LLM artificial intelligence tool and a user by querying the user for challenges identified with testing the target data item and/or assimilating input from the user to resolve mapping complexities.

7. The method of claim 6, wherein the communication interface comprises a conversion filter, the method further comprising:
- employing, by the conversion filter, heuristic logic and/or analytics to ensure system integrity against security critical informational flow between the LLM artificial intelligence tool and the user and/or misuse of the LLM artificial intelligence tool by the user.

8. The method of any one of claims 1 to 7, wherein the communication interface comprises an LLM interpreter, the method further comprising:
- evaluating, by the LLM interpreter, outputs from the LLM artificial intelligence tool before transmitting the information relating to the updated transformation model to the mapper core module.

9. The method of any one of claims 1 to 8 further comprising:
- obtaining, at the mapper core module, a source data structure model and a target data structure model, wherein obtaining comprises receiving or generating the source data structure model and the target data structure model at the mapper core module; and
- generating, at the mapper core module, the transformation model based on the source data structure model and the target data structure model.

10. The method of claim 9, wherein the mapper core module comprises a data structure modeler, the method further comprising:
- aggregating, by the data structure modeler, information relating to the target data structure into the target data structure model and/or information relating to the source data structure into the source data structure model.

11. The method of claim 9 or claim 10, wherein the mapper core module comprises a context mapping engine and an application programming interface, API, mapping engine, the method further comprising:
- aggregating, by the context mapping engine, coding information of the source data structure model and coding information of the target data structure model, wherein coding information comprises at least one of coding style, used libraries, and framework functions; and
- combining, by the API mapping engine, the coding information of source data structure model and the target data structure model to generate the transformation model.

12. The method of any one of claims 1 to 11, wherein the mapper core module comprises a mapping generator, the method further comprising:
- interpreting, by the mapping generator, the information relating to the updated transformation model to update the transformation model.

13. Computing system for automating data structure transformation from a source data structure to a target data structure comprising:
a. a mapper core module;
b. a communication interface connected to a large language model, LLM, artificial intelligence tool and the mapper core module; and
c. one or more feedback actors connected to the mapper core module and to an executing framework requiring the target data structure;
wherein the computing system is configured to:
i) provide, from the mapper core module to the LLM artificial intelligence tool via the communication interface, a transformation model for transforming data items from the source data structure to the target data structure alongside with a request to generate an updated transformation model;
ii) receive, from the LLM artificial intelligence tool at the mapper core module via the communication interface, information relating to the updated transformation model;
iii) update, at the mapper core module, the transformation model based on the information relating to the updated transformation model;
iv) apply, at the mapper core module, the transformation model to a source data item in the source data structure to obtain a target data item in target data structure;
v) test the transformation model and the target data item at the executing framework requiring the target data structure;
vi) acquire, at the mapper core module from at least one feedback actor of the one or more feedback actors, transformation feedback information regarding the correctness of the target data item and/or the transformation model;
vii) repeat features i) to vi) until a stopping condition related to the transformation feedback information is reached; and
viii) use the transformation model for automatic transformation of data items from the source data structure to the target data structure.

14. The computing system of claim 13 being further configured to execute the method of any one of claims 2 to 12.

15. A computer program comprising instructions which, when the program is executed by a computer, cause the computer to carry out the method of any one of claims 1 to 12.
